# EUROPÄISCHE PATENTANMELDUNG

(11) **EP 2 561 983 A1**
(43) Veröffentlichungstag der Anmeldung: **27.02.2013**
(21) Anmeldenummer: 12006037.1
(22) Anmeldetag: 24.08.2012
(51) Int. Cl.: B32B 3/10, B32B 7/02, B32B 7/08

(54) **Anordnung eines Faserwerkstückes in einem schichtweise aufgebauten Werkstück**

(30) Priorität: 24.08.2011 AT 12112011
(71) Anmelder: NAPORO Klima Dämmstoff GmbH, 5280 Braunau am Inn (AT); Kiss, Johann, 2435 Ebergassing (AT)
(72) Erfinder: Kiss, Johann, 2435 Ebergassing (AT)

(57) **Zusammenfassung**

Anordnung eines Faserwerkstückes 1 in einem schichtweise aufgebauten Werkstück, welches zumindest ein Schichtelement als eine Schicht umfasst, wobei das Faserwerkstück 1 benachbart zu dem Schichtelement 3 als eine weitere Schicht angeordnet ist, wobei das Faserwerkstück 1 sich in einer einen Lasteinleitungspunkt 12 beinhaltenden Faserwerkstückebene 4 erstreckt, welche Faserwerkstückebene 4 parallel zu einer Erstreckungsebene 5 des Schichtelementes 3 oder zu einer Oberfläche 6 des Schichtelementes 3 angeordnet ist.

## Beschreibung

Diese Erfindung betrifft die Anordnung eines Faserwerkstückes in einem schichtweise aufgebauten Werkstück, welches zumindest ein Schichtelement als eine Schicht umfasst. Weiters betrifft diese Erfindung die Verwendung des Faserwerkstückes bei obiger Anordnung sowie die spezielle Ausformung des Faserwerkstückes.

Die Einleitung von punktförmigen Belastungen in ein durch eine punktförmige Last nur gering belastbares Element erfolgt nach dem Stand der Technik über ein flächiges Element. Die beispielsweise durch eine Schraube aufgebrachte punktförmige Last wird durch die Verwendung des flächigen Elementes wie beispielsweise eine Beilagscheibe in eine Flächenlast gewandelt. Die punktförmige Belastung und die Flächenlast sind in die gleiche Richtung orientiert.

US20110052897A1 offenbart ein schichtförmig ausgebildetes Werkstück, wobei eine thermisch isolierende Schicht einen fasrigen Werkstoff aus Karbon oder Glas umfassen kann.

In DE102009043359A1 ist die Anordnung eines Faserwerkstückes im Verbund mit einer Dämmschicht offenbart. Es findet sich kein Hinweis auf die Anordnung des Faserwerkstückes in Bezugnahme auf den Ort der Einbringung einer Kraft.

Die hier diskutierte Erfindung stellt sich die Aufgabe, das Faserwerkstück in einem Werkstück so anzuordnen, dass eine auf das Faserwerkstück als punktförmige Last wirkende Belastung von dem Lasteinleitungspunkt auf das Schichtelement als eine auf das Schichtelement als eine auf eine Fläche verteilte Last übergeleitet wird. Erfindungsgemäß wird dies dadurch erreicht, dass das Faserwerkstück als ein weiteres Schichtelement benachbart zu dem Schichtelement angeordnet ist, wobei das Faserwerkstück sich in einer den Lasteinleitungspunkt beinhaltenden Faserwerkstückebene erstreckt, welche Faserwerkstückebene parallel zu einer Erstreckungsebene des Schichtelementes oder zu einer Oberfläche des Schichtelementes angeordnet ist.

Das Schichtelement ist im Regelfall ein durch eine punktförmige Last nur gering belastbares Element. Im Rahmen dieser Erfindung wird unter einem nur geringfügig belastbaren Element ein Element aus einem Werkstoff verstanden, welches Element bei einer punktförmigen Belastung versagt oder hohe Deformationen aufweist.

Das Faserwerkstück kann als ein sich in einem Winkel von 90° zu der Last erstreckendes Element angeordnet sein. Die hier offenbarte Erfindung ist keinesfalls darauf beschränkt, dass das Faserwerkstück ein sich in einer Ebene flach erstreckendes Element ist. Das Faserwerkstück kann auch beispielsweise eine polygonale, gewellte Form aufweisen.

Unter Verweis auf den Stand der Technik und unter Verweis auf die Theorien zur Berechnung von Belastungen in Werkstücken kann von einer punktförmigen Last ausgegangen werden, wenn eine Krafteinleitungsfläche klein im Vergleich zu einer Erstreckung des Werkstückes oder des betrachteten statischen oder dynamischen Systems ist, in welches Werkstück die Kraft eingeleitet wird. Die Krafteinleftungsfläche kann somit für die weitere Berechnung auf einen Lasteinleitungspunkt reduziert werden.

Das Faserwerkstück kann beispielsweise ein Vlieswerkstück, ein Viscosefaserwerkstück sein, dessen Faser die im folgenden geschilderten charakteristischen Eigenschaften aufweist. Das aus einem Faserwerkstoff bestehende Faserwerkstück beinhaltet zumindest eine velzahl von Fasern, welche Fasern sich bei zumindest teilweiser Loslösung aus dem Faserverbund - vorausgesetzt der Nähe der losgelösten Fasern zum Faserverbund - mit dem Faserverbund leicht wieder verbinden.

Das Faserwerkstück zeichnet sich im Vergleich zum Schichtelement, durch eine hohe Zugfestigkeit aus. Vorzugsweise weist der Faserwerkstoff bei Zugbelastung nur kleine elastischen Dehnungen und keine plastischen Dehnungen auf.

Das Faserwerkstück kann in Bezugnahme auf die punktförmige Belastung und die daraus resultierende Ableitung der Kräfte in Teilbereichen angepasste mechanische Eigenschaften aufweisen. Das Faserwerkstück kann beispielsweise als Schichten oder als Zonen vorliegende Teilbereiche mit einer speziellen mechanischen Eigenschaft aufweisen. Die mechanischen Eigenschaften des Faserwerkstückes können beispielsweise eine höhere Festigkeit oder besondere Dehneigenschaften sein.

Die besonderen mechanischen Eigenschaften des Faserwerkstückes können durch eine spezielle Ausformung des Faserwerkstückes, nämlich durch die Verwendung von Fasern mit einer definierten Faserstärke, die Anordnung von Fasern aus einem speziellen Fasermaterial wie beispielsweise Natur- oder Synthesefasern oder von Fasern mit definierten mechanischen Eigenschaften wie Festigkeit, Elastizität begründet sein. Die besonderen mechanischen Eigenschaften des Faserwerkstückes werden weiters durch die Bindung der einzelnen Fasern zueinander bestimmt, wobei hier beispielsweise zwischen sich mechanisch verfestigenden Fasern und chemisch bindenden Fasern zu unterscheiden ist. Kurzfasern und Langfasem können in Bezugnahme auf den hier diskutierten Erfindungsgegenstand beliebig kombiniert werden.

In Bezugnahme auf den gegebenenfalls herzustellenden Verbund zwischen dem Faserwerkstück und einer weiteren Schicht des Werkstückes wird ergänzend angeführt, dass das Faserwerkstück im Verbundbereich zwischen dem Faserwerkstück und der anderen Schicht die oben angeführten speziellen mechanischen Eigenschaften aufweisen kann. Die Überleitung von Kräften von dem Faserwerkstück als eine Schicht in eine weitere Schicht des Werkstückes ist durch die oben beschriebene Wahl des Faserwerkstoffes beeinflussbar.

Das Schichtelement ist ein weiches oder starres Werkstückes, welches bei Belastung durch eine punktförmige Last große elastische und/oder plastische Deformationen oder zumindest lokales Werkstoffversagen aufweist. Das Schichtelement kann beispielsweise aus einem geschäumten Material, einem Steinzeug oder Glas bestehen. Die hier offenbarte Erfindung schließt nicht aus, dass das Schichtelement ein Erdreich, eine Steinschüttung oder dgl. ist.

Das Faserwerkstück kann mit dem Schichtelement verbunden sein, sodass Kräfte und Verformungen vom Faserwerkstück in das Schichtelement übertragen werden können.

Im Rahmen der Diskussion der hier offenbarten Erfindung ist zwischen einem Haftverbund und einem Reibungsverbund zu unterscheiden. Ein Haftverbund wird mittels Adhäsion oder mechanische Verbundmittel wie eine Schraube oder eine Klammer hergestellt.

Eine Verbindung in Form einer Haftverbindung zwischen Faserwerkstück und Schichtelement ist bei Anordnung des Faserwerkstückes und des Lasteinleitungspunktes auf gleicher Seite des Werkstückes und einer Orientierung der Last in einer Richtung - von dem Faserwerkstück gesehen - von dem Schichtelement weg vorzusehen, sodass ein Entfernen des Faserwerkstückes von dem Werkstück durch die Einleitung der Last in das Faserwerkstück unterbunden werden kann.

Die Haftverbindung von Faserwerkstück und Schichtelement kann direkt oder zufolge einer Anordnung weiterer Elemente zwischen dem Schichtelement und dem Faserwerkstück indirekt sein.

Die Erfindung schließt nicht aus, dass der Verbund ein Reibungsverbund ist, welcher durch die einwirkende Last und/oder durch das Gewicht des Schichtelements hergestellt wird, welches auf ein darunter liegendes Faserwerkstück wirkt.

Bei Anordnung des Faserwerkstückes und des Lasteinleitungspunktes auf einer Seite und Orientierung der Last in eine Richtung - vom Faserwerkstück gesehen - zum Werkstück hin ist nicht unbedingt eine Verbindung zwischen Faserwerkstück und Schichtelement vorzusehen.

Vorzugsweise sind bei keinem Verbund von Faserwerkstück und Schichtelement die Oberflächen des Faserwerkstückes und des Schichtelementes so ausgebildet, dass mittels der Rauhigkeit der Oberflächen Schubkräfte zwischen Faserwerkstück und Schichtelement übertragen werden können.

Bei Belastung des Faserwerkstückes durch die punktförmige Last erfährt das Faserwerkstück eine Deformation in Richtung der Orientierung der punktförmigen Last. Diese Deformation bewirkt gemäß Statik Theorie 11 Ordnung eine Ableitung der punktförmigen Last zumindest zu einem Teil als innere Zugkraft des Faserwerkstückes, wobei die Größe der Deformation durch die Wahl des Faserwerkstückes in Bezugnahme auf die Größe der punktförmigen Last und unter Bedachtnahme der Verformbarkeit des Schichtelementes definierbar ist beziehungsweise zu definieren ist. Die innere Zugkraft ist parallel zu der Faserwerkstückebene orientiert.

Die hier offenbarte Erfindung zeichnet sich unter anderem dadurch aus, dass die innere Zugkraft in Richtung der Hauptbelastungsrichtung des Faserwerkstückes orientiert ist.

Das Faserwerkstück kann in jenem Bereich, in welchem das Faserwerkstück eine definierte Verformung erfährt, entkoppelt vom Schichtelement sein, sodass eine Verformung des Schichtelementes in diesem Bereich und somit ein zumindest lokales Versagen des Schichtelementes unterbunden wird.

Aufgrund der erfindungsgemäßen Anordnung, insbesondere der Erstreckung des Faserwerkstückes über eine Oberfläche oder eine Erstreckungsfläche des Schichtelementes und des Verbundes des Faserwerkstückes und des Schichtelementes erfolgt eine Ableitung der inneren Zugkraft des Faserwerkstückes als eine Flächenlast in das Schichtelement. Die Ableitung der Belastungen gehorcht den Gesetzmäßigkeiten der nach dem Stand der Technik bekannten Verbundwerkstofftheorie.

Das Faserwerkstück kann benachbart zu einem Bewehrungselement als ein weiteres Schichtelement angeordnet und mit diesem verbunden sein. Das Bewehrungselement kann mit dem Schichtelement verbunden sein.

Das Bewehrungselement kann in Teilbereichen benachbart zu dem Faserwerkstück angeordnet werden, um in diesen Teilbereichen eine durch die punktförmige Last hervorgerufene Deformation des Faserwerkstückes zu begrenzen. Das Bewehrungselement kann mit dem Faserwerkstück in zumindest Teilbereichen in Abhängigkeit des Verbundes zwischen Faserwerkstück und dem Bewehrungselement als Verbundwerkstück wirken.

Das Bewehrungselement, insbesondere die Oberfläche des Bewehrungselementes kann zur Herstellung eines Adhäsionsverbundes zwischen Bewehrungselement und Faserwerkstück sowie Bewehrungselement und Schichtelement ausgebildet sein.

Das Bewehrungselement kann mechanische Vorrichtungen umfassen, welche sich in das Faserelement und in das Schichtelement erstrecken, und den Verbund zwischen Schichtelement und Faserelement bewerkstelligen.

Das Bewehrungselement kann aus einem Material oder Werkstoffen wie Stahl, Aluminium, Pappe in den nach dem Stand der Technik bekannten, verschiedenen Ausführungsformen wie beispielsweise Vollpappe, Kunststoff-Folie bzw. Kunststoffplatten oder Holz hergestellt sein, welche eine hohe Zugfestigkeit aufweisen. Das Bewehrungselement weist bei einer Zugbelastung im Vergleich zum Faserwerkstück nur kleine elastische, keine plastischen Verformungen auf, wodurch bei Verbund zwischen dem Bewehrungselement und dem Faserwerkstück eine Verformung des Faserwerkstückes unterbunden wird.

Das Bewehrungselement kann aus einem Fasern umfassenden Werkstoff hergestellt sein. Das Bewehrungselement kann integrativ, als ein Teilbereich oder eine Schicht des Faserwerkstückes ausgebildet sein.

Das Bewehrungselement kann auch mit dem Schichtelement oder weiteren Elementen des Werkstückes verbunden sein.

Bei einer Einbringung eines Bolzens umfassend eine raue Bolzenoberfläche in einem zu der Bolzenoberfläche angrenzenden Kontaktoberflächenbereich des Faserwerkstückes wird ein verdichteter Bereich im Faserwerkstück hergestellt, wobei der Bolzen sich durch den Lasteinbringungspunkt der punktförmigen Last erstreckt. Die raue Oberfläche erstreckt sich zumindest über einen Teilbereich des Bolzens, welcher in Kontakt mit dem Faserwerkstück während des Einbringens der Bolzens in und während des Verbleibens des Bolzens im Faserwerkstück steht.

Durch die Einbringung des Bolzens mit einer rauen Bolzenoberfläche werden zum Teil Fasern aus dem Faserverbund gelöst. Die zum Teil gelösten Fasern werden in einer Bewegungsrichtung des Bolzens und in einer durch die stattfindende Verdrängung von Volumina definierte Richtung verschoben. Wegen der oben angeführten charakteristischen Eigenschaften des Faserwerkstoffes ist eine neuerliche Verbindung der losgelösten Fasern mit dem Faserverbund nach dem Einbringen des Bolzens möglich, wodurch es zu einer Neuanordnung der Fasern im Faserwerkstück kommt. Die Neuanordnung der Fasern ist durch eine Anpassung an die Form des Bolzens, insbesondere der rauen Bolzenoberfläche geprägt, sodass die Übertragung der auf den Bolzen wirkenden punktförmigen Last in das Faserwerkstück durch einen geometrischen Formschluss zwischen Faserwerkstück und rauer Bolzenoberfläche bewirkbar ist.

Durch das Verschieben und durch die Neuanordnung der Fasern ist die Ausbildung eines verdichteten Bereiches des Faserwerkstückes in dem Kontaktoberflächenbereich möglich. Insbesondere durch das Verdrängen der Fasern stellt sich im Faserwerkstück ein Druckzustand ein, welcher unter anderem die Ausbildung des verdichteten Bereiches hervorruft. Der verdichtete Bereich weist im Vergleich zum übrigen, nicht verdichteten Bereich des Faserwerkstoffes eine höhere mechanische Festigkeit auf. Durch die höhere Festigkeit des Faserwerkstoffes wird ein Ausreißen des Bolzens aus dem Faserwerkstück unterbunden.

Das Einbringen des Bolzens kann auch eine Verdrängung der Fasern in Richtung des Einbringens des Bolzens hervorrufen, wodurch die Dicke des Faserwerkstückes erhöht wird. Die Kontaktoberfläche zwischen dem Bolzen und dem Faserwerkstück kann dadurch vergrößert werden.

Der Vorgang des Loslösens der Fasern kann durch spezielle Verfahren des Einbringens des Bolzens wie ein stoßweise, schwingendes Einbringen des Bolzens hervorgerufen werden. Weiters kann der Bolzen hierzu einen definierten Temperaturbereich aufweisen.

Der Bolzen kann eine Schraube sein, wobei die raue Bolzenoberfläche das Schraubengewinde ist.

Durch das Eindrehen der Schraube in das Faserwerkstück werden die Fasern durch die zwischen Schraube und Faserwerkstück stattfindende Reibung aus dem Faserverbund gelöst, in Drehrichtung der Schraube und in Richtung des Schraubengewindes verschoben. Bei Erreichen der Endposition der Schraube kommt es wegen der charakteristischen Eigenschaften des Faserwerkstoffes zu einem neuerlichen Verbund der Fasern im Faserverbund und einer Neuanordnung der Fasern.

Neben der Verwendung einer Schraube können auch weitere bekannte bolzenartige Verbindungsvorrichtungen wie beispielsweise eine Niete zur Anwendung kommen, welche eine raue Oberfläche im Kontaktbereich zu dem Faserwerkstück aufweisen.

Der Bolzen kann an der Bolzenoberfläche einen Klebestoff umfassen.

Durch die Einbringung des Bolzens in das Faserwerkstück wird der an der Bolzenoberfläche haftende Klebstoff in das Faserwerkstück eingebracht. Die raue Bolzenoberfläche und/oder eine hinreichende Saugkraft des Faserwerkstoffes verhindert, dass der Klebstoff durch das den Bolzen umschließende Faserwerkstück während des Einbringens des Bolzens in das Faserwerkstück abgestreift wird und somit nicht in den Kontaktoberflächenbereich eingebracht werden kann.

Der Faserwerkstoff, welcher einer Anordnung und einer Verwendung nach obiger Beschreibung zugeführt ist, kann in dem Kontaktoberflächenbereich des Fasennrerkstückes ein Klebemittel beinhalten.

Das Klebemittel kann im Faserverbund des Faserwerkstückes eingebettet sein. Es wird hierbei ein Teilbereich des Faserwerkstückes in Kontakt mit einem gegebenenfalls nach Aktivierung als Klebestoff wirkenden Material gebracht. Es können hierbei Thermoplaste oder Elastomere Anwendung finden, in welche im flüssigen Zustand vorliegend das Faserwerkstück getränkt wird.

Das Klebemittel kann auch als ein Bestandteil der Fasern vorliegen. Es können beispielsweise bei niedrigen Temperaturen schmelzende PE- oder PP-Fasem, Fasern aus Polymilchsäure in zumindest Teilbereichen des Faserwerkstückes eingesetzt werden.

Das Klebemittel kann so beschaffen sein, dass dieses durch eine Wärmezufuhr aktivierbar ist. Die Wärmezufuhr kann durch die Einbringung des Bolzens mit einer definierten Drehgeschwindigkeit und/oder Vortriebsgeschwindigkeit bewerkstelligt werden, welche Einbringung eine Reibung zwischen der Bolzenoberfläche und dem Faserwerkstück und somit eine Erwärmung des Bolzens und des Faserwerkstückes hervorruft.

Das Vorkommen des Klebemittels im Faserwerkstück und/oder an der Bolzenoberfläche unterbindet die oben beschriebene Loslösung und Neuanordnung von Faser während des Einbringens des Bolzens beziehungsweise nach dem Einbringen des Bolzens nicht. Die Erfindung schließt nicht aus, dass das Klebemittel während des Einbringens des Bolzens in einen die Fasern nicht haltenden Zustand versetzt werden, sodass die Fasern aus dem Verbund gelöst und neu angeordnet werden können.

Weiters kann eine Aktivierung des Klebemittels durch die Einbringung eines erwärmten Bolzens oder durch eine temporäre Erwärmung des eingebrachten Bolzens bewerkstelligt werden. Vorzugsweise kommen Bolzen zum Einsatz, welche in Bezugnahme auf die Erwärmung des Bolzens eine angepasste Wärmespeicherung und Wärmleitfähigkeit aufweisen.
Figur 1 zeigt eine erfindungsgemäße Anordnung des Faserwerkstückes benachbart zu dem Schichtelement.
Figur 2 zeigt eine weitere erfindungsgemäße Anordnung des Faserwerkstückes benachbart zu dem Schichtelement.
Die Figur 3 zeigt Kraft-Weg-Diagramme von Ausziehversuchen eines Bolzens aus einem schichtweise aufgebauen Werkstück samt eines erfindungsgemäß angeordneten Faserwerkstückes.

- 1: Faserwerkstück
- 2: punktförmige Last
- 3: Schichtelement
- 4: Faserwerkstückebene
- 5: Erstreckungsebene (des Werkstückes)
- 6: Oberfläche (des Werkstückes)
- 7: Hauptkraftkomponente
- 8: Bewehrungselement
- 9: Bolzen
- 10: Bolzenoberfläche
- 11: Kontaktoberflächenbereich
- 12: Lasteinleitungspunkt
- 13: deformierte Faserwerkstückebene
- 14: Zugkräfte Faserwerkstück
- 15: freies Bolzenende
- 16: Zugkräfte
- 17: Momente
- 18: Belastungsachse
- 19: Zugspannung
- 20: Bewehrungselementene
- 100-: Messkurve

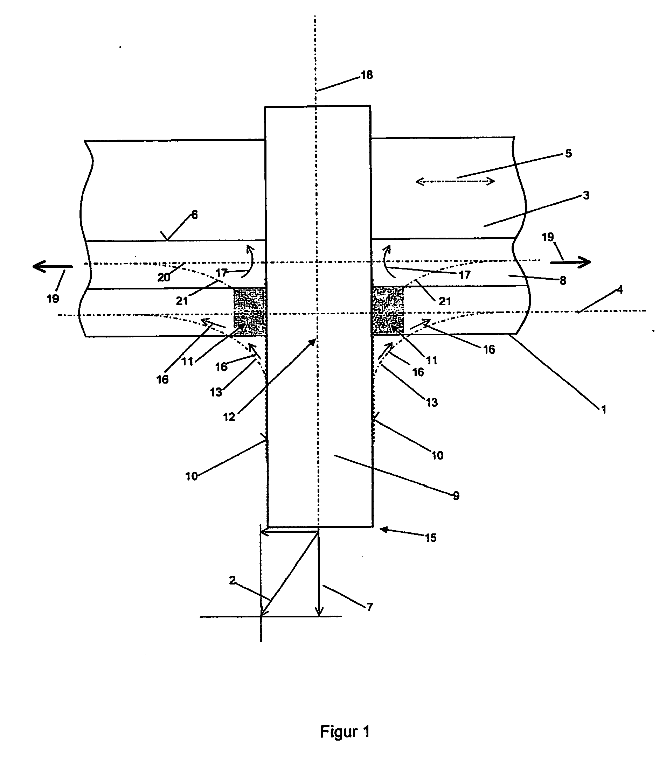

Figur 1 zeigt eine erfindungsgemäße Anordnung des Faserwerkstückes benachbart zu dem Schichtelement. Figur 1 zeigt ein Werkstück umfassend ein durch eine punktförmige Last nicht belastbares Schichtelement 3, ein Bewehrungselement 8 und ein erfindungsgemäß angeordnetes Faserwerkstück 1. Das Schichtelement 3, das Bewehrungselement 8 und das Faserwerkstück 1 sind zur Überleitung einer punktförmigen Last 2 von einem Lasteinleitungspunkt 12 auf das Schichtelement 3 angeordnet, sodass die Last auf das Schichtelement 3 als eine auf eine Fläche verteilte Last wirkt. Der Lasteinleitungspunkt 12 und das Faserwerkstück sind auf der gleichen Seite des Schichtelementes 3 angeordnet. Die Last 2 ist in Richtung - vom Faserwerkstück 1 gesehen - vom Schichtelement 3 weg orientiert, sodass ein Entfernen des Faserwerkstückes 1 von dem Schichtelement 3 durch einen Verbund zwischen Faserwerkstück 1 und Schichtelement 3 in zumindest Teilbereichen indirekt über das Bewehrungselement 8 unterbunden ist.

Das Faserwerkstück 1 erstreckt sich in einer den Lasteinleitungspunkt 12 beinhaltenden Faserwerkstückebene 4, welche Faserwerkstückebene 4 parallel zu einer Erstreckungsebene 5 des Schichtelementes 3 und zu einer Oberfläche 6 des Schichtelementes 3. Die Faserwerkstückebene 4 ist in einem Winkel von 90° zu einer Hauptkraftkomponente der punktförmigen Last 2 angeordnet.

Das Bewehrungselement erstreckt sich in einer Bewehrungselementebene 20, welche parallel zu der Faserwerkstückebene 4 angeordnet ist. Das Faserelement 1 ist mit dem Bewehrungselement 8 in einem Teilbreich flächig verbunden, in welchem Teilbereich die Dehnungseigenschaften des Faserwerkstückes 1 durch das Bewehrungselement bestimmt wird. Das Bewehrungselement 8 ist wiederum mit dem Schichtelement 3 verbunden.

Durch die Einbringung eines Bolzens 9, welcher an seiner Oberfläche eine raue Bolzenoberfläche 10 umfasst und welcher Bolzen 9 sich durch den Lasteinbringungspunkt 12 der punktförmigen Last 2 erstreckt, in einem zu der Bolzenoberfläche 10 angrenzenden Kontaktoberflächenbereich 11 des Faserwerkstückes 1 wird ein verdichteter Bereich im Kontaktoberflächenbereich 11 zwischen dem Bolzen 9 und dem Faserwerkstück hergestellt. Die Herstellung des verdichteten Bereiches geschieht einerseits durch teilweise Loslösung von Fasern aus dem Faserverbund des Faserwerkstückes 1, anschließende Verschiebung in einer Bewegungsrichtung des Bolzens 9 während des Einbringens des Bolzens 9 und Neuanordnung der losgelösten Fasern und der im Faserverbund befindlichen Fasern nach der Einbringung des Bolzens 9. Andererseits erfolgt durch die Einbringung des Bolzens eine Verdrängung der zum Teil losgelösten Fasern und die Einstellung eines Druckzustandes im Faserwerkstück.

Der verdichtete Bereich des Faserwerkstückes 1 im Kontaktoberflächenbereich 11 weist einen Formschluss mit dem Bolzen 9 auf. Der verdichtete Bereich hat darüber hinaus wegen der höheren Faserdichte höhere Festigkeiten als der unverdichtete Bereich des Faserwerkstücks.

Das Faserwerkstück 1 umfasst in dem Kontaktobertlächenbereich 11 des Faserwerkstückes 1 ein Klebemittel, durch welches eine Verklebung der Bolzenoberfläche 10 und des Faserwerkstückes 1 hergestellt wird.

Eine am freien Bolzenende 15 wirkende Last 2 mit einer vertikal wirkenden Hauptkraftkomponente 7 bewirkt wegen der bewerkstelligten Lastüberleitung vom Bolzen 9 in das Faserwerkstück 1 eine Deformation der Faserwerkstückebene 4 zu einer verformten Faserwerkstückebene 13. Die Größe der Deformation wird durch die mechanischen Eigenschaften des Bewehrungselementes 8 sowie durch den Verbund zwischen Faserwerkstück 1 und Bewehrungselement 8 bestimmt Da das Faserwerkstück 1 und das Bewehrungselement 8 an deren Berührungsflächen verbunden sind, entspricht der Verlauf der verformten Faserwerkstückebene 13 dem Verlauf der verformten Bewehrungselementebene 21.

Aufgrund der Deformation wird in der Hauptsache die Hauptkraftkomponente 7 gemäß Statik Theorie II. Ordnung durch im Faserwerkstück 1 wirkende Zugkräfte 16 aufgenommen.

In Abhängigkeit der mechanischen Eigenschaften des Bewehrungselementes 8 und des Verbundes zwischen dem Bewehrungselement 8 und dem Faserwerkstück 1 ergeben sich weiters auf das Bewehrungselement 8 wirkende Momente 17. Die durch die Momente 17 hervorgerufene Belastung des Bewehrungselementes 8 ist im wesentlichen auf einen Teilbereich des Bewehrungselementes 8 in der Nähe der Belastungsachse 18 beschränkt.

Wegen des Verbundes zwischen Schichtelement 3, Bewehrungselement 8 und Faserwerkstück 1 und der erfindungsgemäßen Anordnung von Schichtelement 3, Bewehrungselement 8 und Faserwerkstück 1 zueinander kommt es zu einer Verteilung der Zugkraft 16 und zu einer über den Querschnitt des Werkstückes verteilten Zugspannung 19, welche in Figur 1 durch die resultierende Kraft symbolisiert ist.

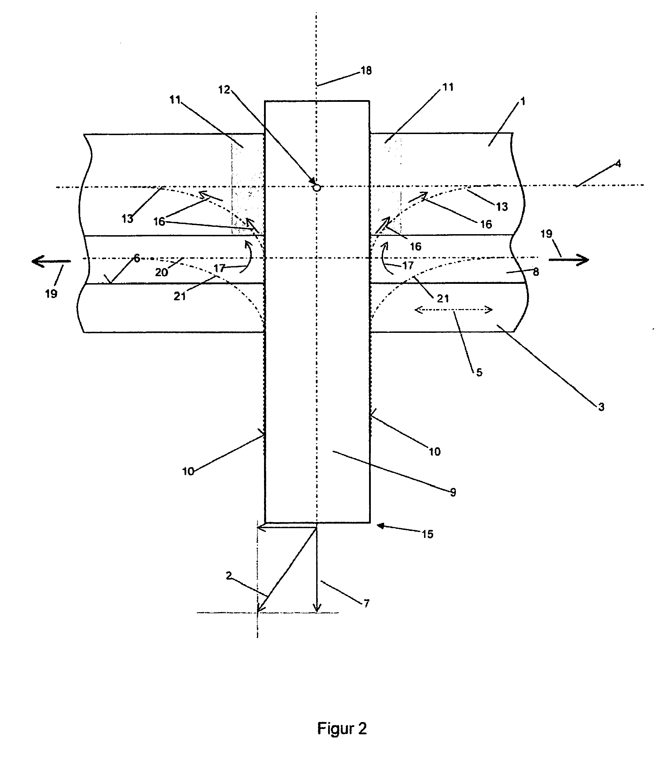

Figur 2 zeigt eine weitere enfindungsgemäße Anordnung des Faserwerkstückes benachbart zu dem Schichtelement. Figur 2 zeigt ein Werkstück umfassend ein durch eine punktförmige Last nicht belastbares Schichtelement 3, ein Bewehrungselement 8 und ein erfindungsgemäß angeordnetes Faserwerkstück 1. Das Schichtelement 3, das Bewehrungselement 8 und das Faserwerkstück 1 sind zur Überleitung einer punktförmigen Last 2 von einem Lasteinleitungspunkt 12 auf das Schichtelement 3 angeordnet, sodass die Last auf das Schichtelement 3 als eine auf eine Fläche verteilte Last wirkt. Der Lasteinleitungspunkt 12 und das Faserwerkstück sind auf der gleichen Seite des Schichtelementes 3 angeordnet. Die Last 2 ist in Richtung - vom Faserwerkstück 1 gesehen - zum Schichtelement 3 orientiert, sodass ein Entfernen des Faserwerkstückes 1 von dem Schichtelement 3 durch die Anwesenheit des Schichtelementes 2 unterbunden ist.

Die Deformation des Faserwerkstückes 1 ist durch das Bewehrungselement 8 und das Schichtelement 3 bestimmt. Gemäß Theorie II Ordnung bewirkt die Deformation des Faserwerkstückes 1 einer zumindest teilweisen Aufnahme der Last 2 in Form von innerhalb des Faserwerkstückes 1 wirkenden Zugkräften 14, welche durch einen Reibungsverbund zwischen Faserwerkstück und Bewehrungselement 8 in dieses übertragen werden. Durch den Verbund zwischen Bewehrungselement 8 und dem Schichtelement 8 kommt es zu einer flächig verteilten Einleitung der Last 2 in Form einer Zugspannung 19.

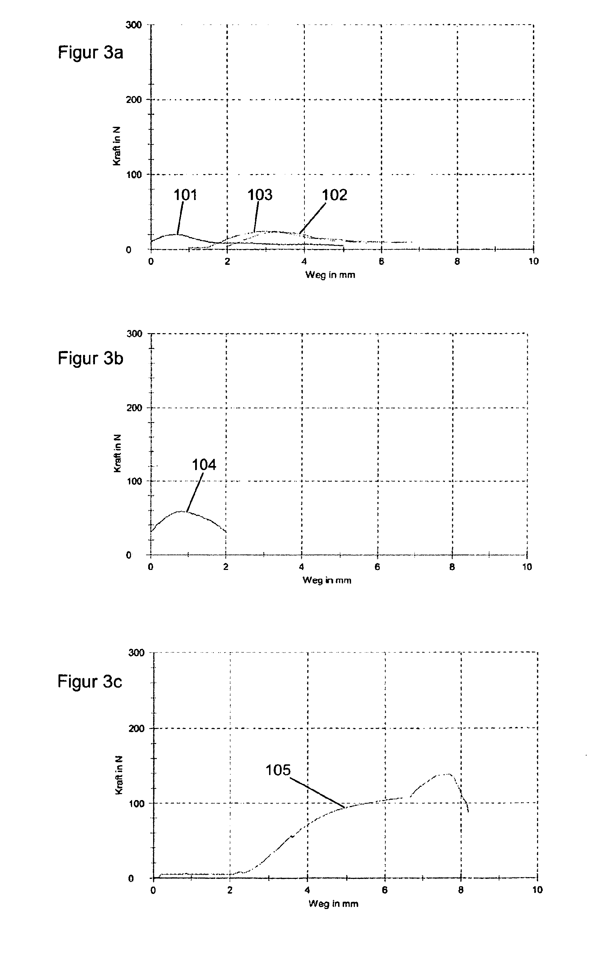

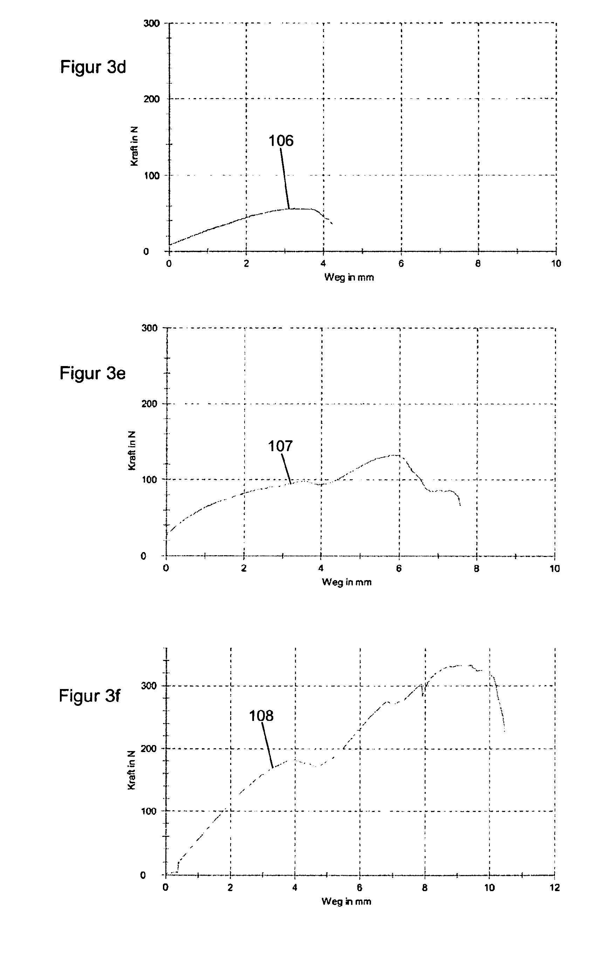

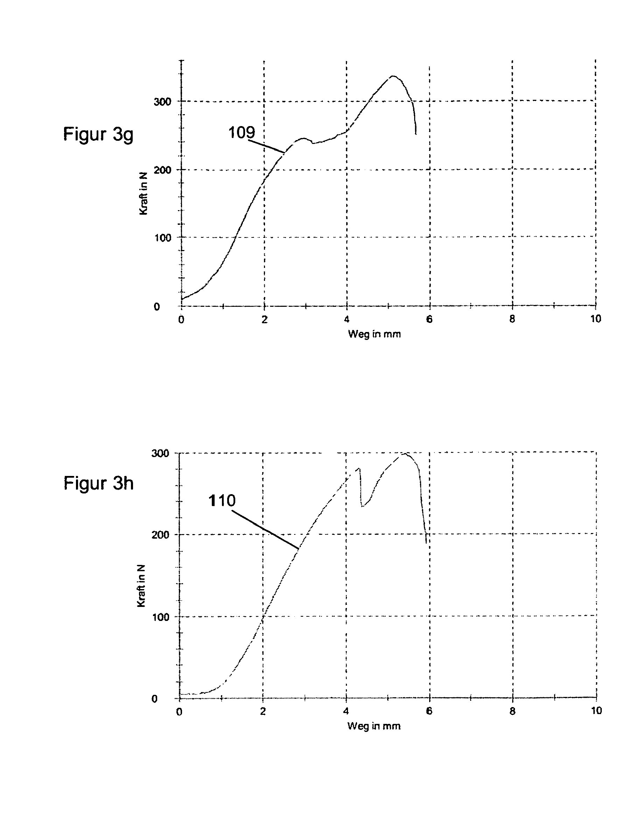

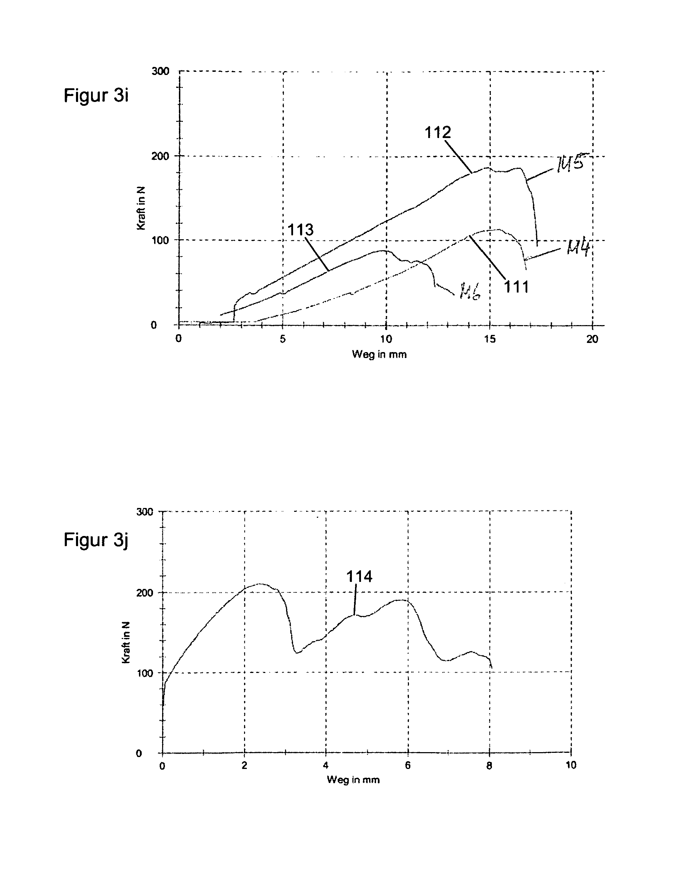

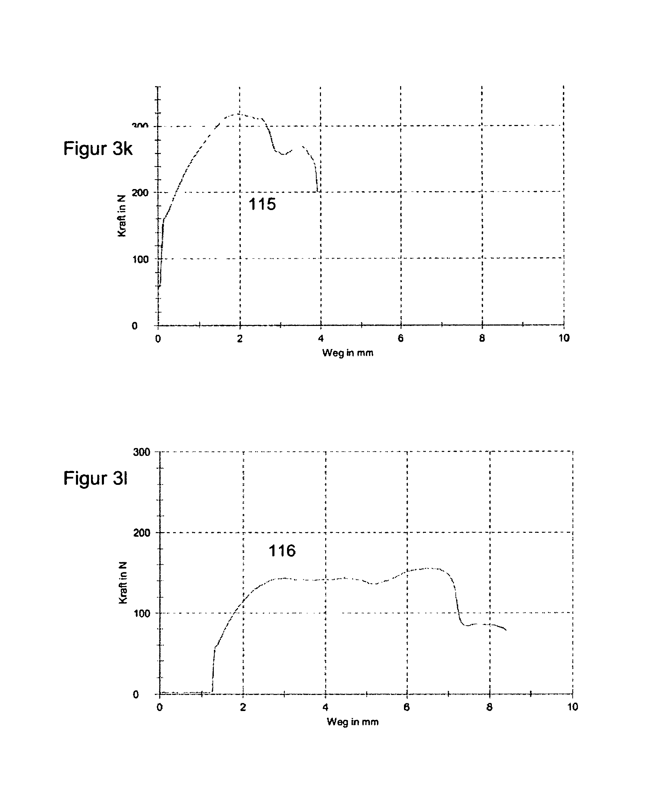

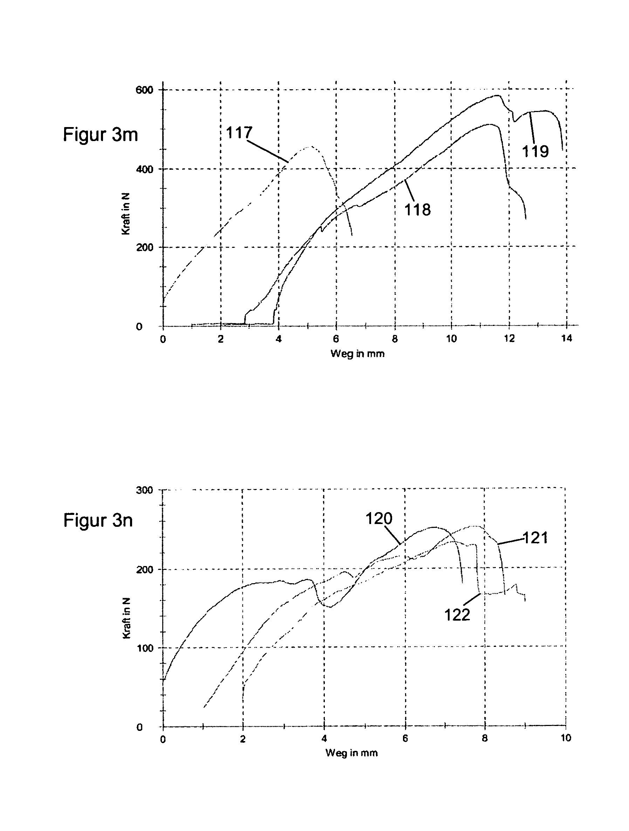

Figur 3a bis Figur 3n zeigen Kraft-Weg-Diagramme über Ausziehversuche von der in nachstehender Tabelle angegebener Schrauben aus in ebenfalls nachstehender Tabelle angegebenen Werkstücken.

Die Versuche wurden auf einer Standard-Zug-Prüfmaschine mit einer vorgegebenen Ausziehgeschwindigkeit von 10mm/min durchgeführt. Es wurden als Bolzen Schrauben (handelsübliche Spanplattenschrauben) gemäß Tabelle verwendet, welche über die gesamte Dicke des zu prüfenden Werkstückes geschraubt waren.

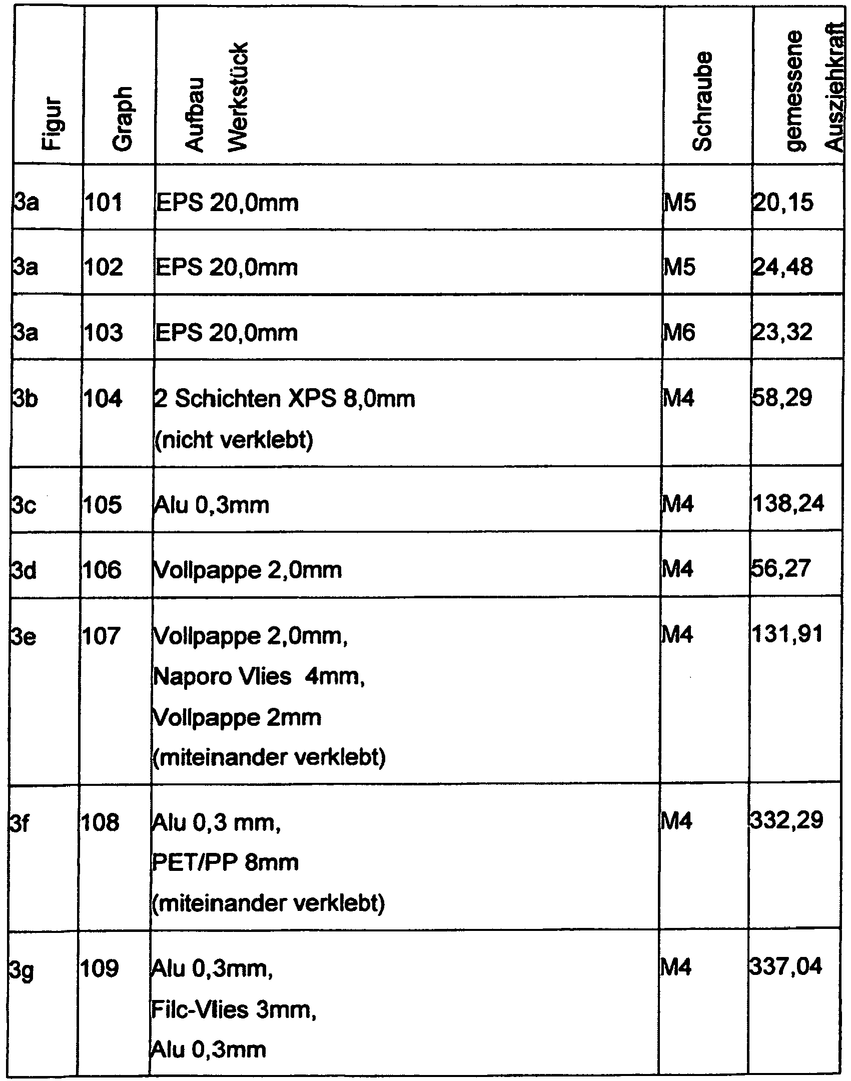

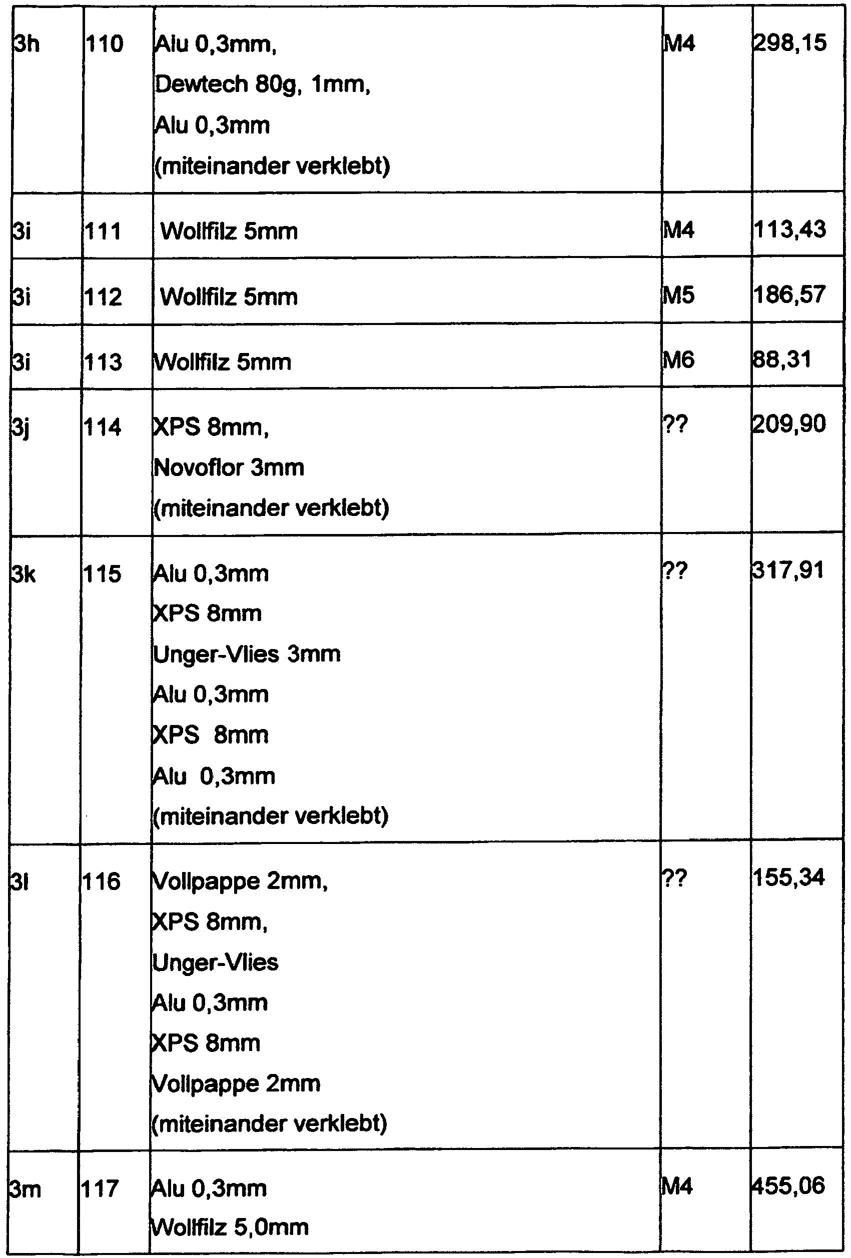

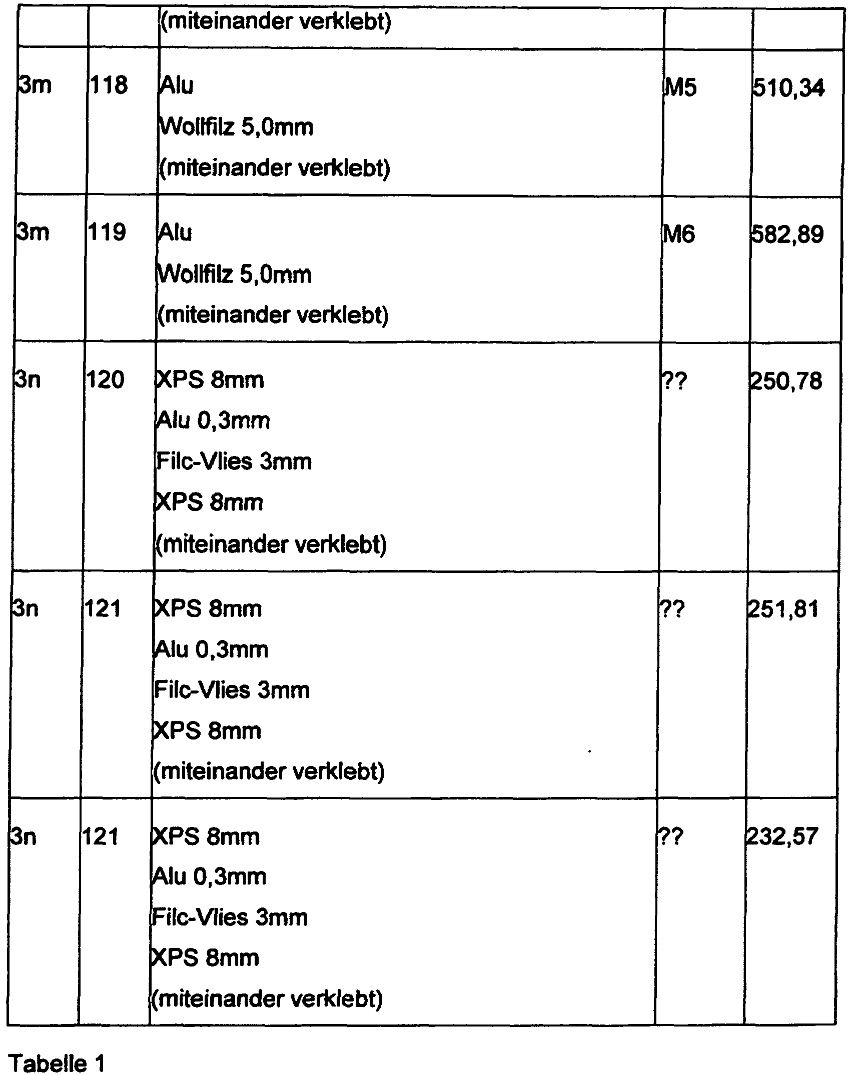

In Bezugnahme auf Figur 3i ist festzuhalten, dass die Verwendung einer Schraube mit einem größeren Durchmesser nicht zwangsläufig zu höheren Ausziehkräften führen muss. Bei den hier diskutierten Versuchen wurden Normschrauben verwendet, welche in Abhängigkeit von den angegebenen Durchmessern eine gewisse Anzahl von Gewindegängen pro Gewindelänge aufweisen.

Der Fachmann erkennt aus den in Figur 3i dargestellten Ergebnissen, dass unter anderen Faktoren die Anzahl der Gewindewindungen, welche in den Faserwerkstoff eingebracht sind, entscheidend für die Ausziehfestigkeit sind.

## Patentansprüche

1. Anordnung eines Faserwerkstückes (1) in einem schichtweise aufgebauten Werkstück, welches zumindest ein Schichtelement als eine Schicht umfasst,
**dadurch gekennzeichnet, dass**
das Faserwerkstück (1) benachbart zu dem Schichtelement (3) als eine weitere Schicht angeordnet ist, wobei das Faserwerkstück (1) sich in einer einen Lasteinleitungspunkt (12) beinhaltenden Faserwerkstückebene (4) erstreckt, welche Faserwerkstückebene (4) parallel zu einer Erstreckungsebene (5) des Schichtelementes (3) oder zu einer Oberfläche (6) des Schichtelementes (3) angeordnet ist.

2. Anordnung eines Faserwerkstückes nach Anspruch 1, **dadurch gekennzeichnet, dass** das Faserwerkstück (1) mit dem Schichtelement (3) verbunden ist.

3. Anordnung eines Faserwerkstückes (1) nach einem Anspruch 1-2, **dadurch gekennzeichnet, dass** das Werkstück ein Bewehrungselement (8) umfasst, zu welchem Bewehrungselement (8) das Faserwerkstück (1) benachbart angeordnet ist.

4. Anordnung eines Faserwerkstückes (1) nach Anspruch 3, **dadurch gekennzeichnet, dass** das Faserwerkstück (1) mit dem Bewehrungselement (8) verbunden ist.

5. Verwendung eines Faserwerkstückes (1) angeordnet nach einem der Ansprüche 1-4, **dadurch gekennzeichnet, dass** durch die Einbringung eines Bolzens (9) umfassend eine raue Bolzenoberfläche (10) in einem zu der Bolzenoberfläche (10) angrenzenden Kontaktoberflächenbereich (11) des Faserwerkstückes (1) ein verdichteter Bereich im Faserwerkstück herstellbar ist, wobei der Bolzen (9) sich durch den Lasteinbringungspunkt (12) der punktförmigen Last (2) erstreckt.

6. Verwendung eines Faserwerkstückes (1) nach Anspruch 5, **dadurch gekennzeichnet, dass** das Faserwerkstück mit einer Schraube als Bolzen (9) in Kontakt bringbar ist, wobei die raue Bolzenoberfläche das Schraubengewinde ist.

7. Verwendung eines Faserwerkstückes (1) nach einem der Ansprüche 5—6, **dadurch gekennzeichnet, dass** das Faserwerkstück mit einem an der Bolzenoberfläche einen Klebstoff umfassenden Bolzen (9) in Kontakt bringbar ist.

8. Faserwerkstoff (1), welcher einer Anordnung nach einem der Ansprüche 1-4 und einer Verwendung nach einem der Ansprüche 5-6 zugeführt ist, **dadurch gekennzeichnet, dass** das Faserwerkstück (1) in dem Kontaktoberflächenbereich (11) des Faserwerkstückes (1) ein Klebemittel beinhaltet.
